# FASCICULE DE BREVET EUROPEEN

(11) **EP 4 015 313 B1**
(45) Date de publication et mention de la délivrance du brevet: **29.11.2023**
(21) Numéro de dépôt: 21203609.9
(22) Date de dépôt: 20.10.2021
(51) Int. Cl.: B60R 9/06, B60P 1/54, B60R 11/06, B60R 11/00

(54) **DISPOSITIF DE MAINTIEN ET DÉPOSE D'UN ÉQUIPEMENT PAR RAPPORT À UNE PAROI EXTERNE D'UN VÉHICULE ET PROCÉDÉ METTANT EN OEUVRE UN TEL DISPOSITIF**
VORRICHTUNG ZUM HALTEN UND ABNEHMEN EINER AUSRÜSTUNG IN BEZUG AUF EINE AUSSENWAND EINES FAHRZEUGS UND ANWENDUNGSVERFAHREN FÜR EINE SOLCHE VORRICHTUNG
DEVICE FOR HOLDING AND DEPOSITING A DEVICE IN RELATION TO AN OUTER WALL OF A VEHICLE AND METHOD IMPLEMENTING SUCH A DEVICE

(30) Priorité: 18.12.2020 FR 2012819
(43) Date de publication de la demande: 22.06.2022
(73) Titulaire: NEXTER Systems, 78034 Versailles Cedex (FR)
(72) Inventeur: BERTRAND, Ludovic, 18023 BOURGES Cedex (FR)
(74) Mandataire: Cabinet Chaillot

(56) Documents cités:
- EP-A1- 1 561 659
- US-A- 6 042 328
- US-A1- 2019 232 851

## Description

Le domaine technique de l'invention est celui des dispositifs permettant le maintien d'un équipement par rapport à une paroi externe d'un véhicule et également la dépose de cet équipement de son emplacement pour le placer par exemple sur le sol.

Il est classique de fixer divers équipements sur la paroi externe d'un véhicule, cela afin de libérer de l'espace à l'intérieur du véhicule et pour faciliter également l'emploi d'équipements qui sont dédiés à un usage extérieur : outillages, roues de secours, groupe électrogène...

Les équipements sont parfois logés dans des coffres mais ils sont aussi souvent liés à un berceau de maintien auquel ils sont liés par des moyens de fixation démontables. Le document US 2019/232851 A1 décrit un dispositif de maintien et dépose d'un équipement par rapport à une paroi externe d'un véhicule, dispositif comprenant une potence montée pivotante par rapport à un axe vertical.

On connaît par exemple par le brevet EP1291609 un dispositif de maintien et de dépose de batteries de véhicule dans lequel le bloc de batteries est solidaire de bras pivotants qui permettent de le faire passer d'une position rangée dans un coffre externe à une position posée sur le sol.

Ce dispositif ne peut être utilisé que pour des coffres dont la hauteur est du même ordre de grandeur que la distance du coffre au sol. En effet la dépose de la batterie sur le sol ne peut se faire que si les bras pivotants ont une longueur suffisante.

Pour pallier cet inconvénient le brevet EP1561659 propose de prévoir une potence dépliable qui est déployée dans un premier temps hors du coffre. La batterie est ensuite sortie du coffre par un plateau coulissant, ce qui permet de la positionner en dessous de la potence, puis d'attacher un câble et descendre la batterie après avoir effacé le plateau coulissant.

Un tel dispositif est complexe et implique la présence d'un plateau coulissant qui est fortement sollicité par la masse de l'équipement. Il impose également de disposer d'un espace au-dessus du coffre permettant le déploiement de la potence.

Ce dispositif n'est pas adapté à la dépose d'équipements qui sont logés dans des renfoncements de la paroi externe du véhicule, renfoncements qui ne permettent pas le déploiement du bras de potence décrit.

C'est le but de l'invention que de proposer un dispositif de maintien et dépose d'un équipement par rapport à une paroi externe d'un véhicule, dispositif qui soit tout à la fois robuste et compact.

Le dispositif proposé par l'invention peut ainsi être adapté à tout type de positionnement sur la paroi externe du véhicule, même dans des zones formant des renfoncements entre des coffres ou organes du véhicules, renfoncements réduisant l'accessibilité.

Ainsi l'invention a pour objet un dispositif de maintien et dépose d'un équipement par rapport à une paroi externe d'un véhicule, dispositif comprenant un berceau destiné à être fixé à la paroi externe du véhicule et destiné à recevoir l'équipement qui est rendu solidaire du berceau par des moyens de fixation démontables, le berceau portant une potence pivotante articulée par rapport au berceau, dispositif caractérisé en ce que la potence est montée pivotante par rapport à un axe vertical, potence comportant un bras qui s'étend, lorsque la potence est repliée, au-dessus de l'équipement lorsque celui-ci est lui-même en position solidaire du berceau, potence qui porte à son extrémité un câble ayant un brin vertical reliant la potence à l'équipement, un treuil assurant l'enroulement ou le déroulement du câble pour permettre la dépose de l'équipement, par exemple au sol, après pivotement de la potence.

Selon un mode particulier de réalisation, le berceau pourra comporter une face inférieure sur laquelle l'équipement sera destiné à être placé et deux faces latérales destinées à être positionnées de part et d'autre de l'équipement, la potence constituant une des faces latérales du berceau et étant articulée au niveau d'un côté du berceau, le pivotement de la potence écartant son bras de la face inférieure, la potence comportant une jambe pouvant par ailleurs être rendue solidaire du berceau par un moyen de solidarisation lorsqu'elle est en position repliée.

Selon un mode de réalisation de l'invention, la potence pourra porter le treuil motorisé, le bras portant au moins une poulie permettant d'orienter le câble vers le treuil, le câble portant à son extrémité libre un moyen d'attache destiné à être fixé à l'équipement.

Selon un autre mode de réalisation, le treuil motorisé pourra être solidaire d'une interface de levage destinée à être fixée à l'équipement, l'interface de levage comportant au moins une poulie de renvoi permettant de positionner le brin d'extrémité du câble à la verticale du bras de la potence, le câble étant fixé au bras de la potence par un moyen d'attache.

Avantageusement, la potence pourra porter une aile formant un angle avec le bras, aile portant au moins deux zones d'appui et le bras comportant par ailleurs au moins une troisième zone d'appui, les au moins trois zones d'appui étant destinées à assurer un contact avec l'équipement et/ou l'interface de levage avant le pivotement de la potence.

L'invention a également pour objet un procédé de dépose d'un équipement mettant en oeuvre le dispositif selon l'invention, procédé caractérisé par les étapes suivantes :
- on détache l'équipement du berceau en retirant les moyens de fixation démontables ;
- on retire le moyen de solidarisation de la jambe et du berceau ce qui autorise le pivotement de la potence ;
- on commande le treuil pour soulever l'équipement jusqu'à contact de l'équipement et/ou de l'interface de levage contre les zones d'appui sur l'aile et le bras ;
- on fait pivoter la potence sur ses articulations pour écarter l'équipement de la face inférieure du berceau et le positionner au-dessus d'une zone dégagée ;
- on commande le treuil pour faire descendre l'équipement jusqu'à la zone dégagée.

Selon une variante du procédé, après dépose de l'équipement, on pourra désolidariser l'interface de levage de l'équipement.

Selon une autre variante du procédé, après dépose de l'équipement, on pourra commander le treuil pour faire remonter l'interface de levage et l'amener en contact contre les zones d'appui sur l'aile et le bras.

Avantageusement, après remontée de l'interface de levage, on pourra replier la potence et solidariser la jambe et le berceau.

L'invention sera mieux comprise à la lecture de la description qui va suivre de modes particuliers de réalisation, description faite en référence aux dessins annexés et dans lesquels :
[Fig. 1] montre une partie arrière d'un véhicule blindé et permet de visualiser l'emplacement de l'équipement ;
[Fig. 2] est une vue en perspective montrant la mise en place d'un dispositif selon un premier mode de réalisation de l'invention ;
[Fig. 3] est une vue du berceau du dispositif selon ce mode de réalisation de l'invention, fixé au véhicule et lorsque l'équipement est retiré ;
[Fig. 4] est une vue en perspective arrière de l'équipement mis en place sur le berceau ;
[Fig. 5] montre le berceau du dispositif selon ce mode de réalisation de l'invention ;
[Fig. 6] montre ce berceau une fois la potence retirée ;
[Fig. 7] montre la potence retirée du berceau ;
[Fig. 8] est une autre vue en perspective inférieure de la potence ;
[Fig. 9] est une vue de dessus de l'équipement portant l'interface de levage ;
[Fig. 10] est une vue latérale du dispositif fixé sur le berceau ;
[Fig. 11] est une vue latérale du dispositif lors d'une étape initiale du procédé de dépose ;
[Fig. 12] est une vue première vue en perspective de l'interface de levage et de la potence ;
[Fig. 13] est une vue frontale de l'interface de levage et de la potence ;
[Fig. 14] est une seconde vue en perspective de l'interface de levage et de la potence ;
[Fig. 15] est une vue troisième vue en perspective de l'interface de levage et de la potence ;
[Fig. 16] est une vue en perspective arrière du dispositif lors de l'étape représentée à la figure 11 ;
[Fig. 17] est une vue en perspective arrière du dispositif lors d'une autre étape du procédé de dépose ;
[Fig. 18] est une vue en perspective arrière du dispositif lorsque l'équipement est posé au sol ;
[Fig. 19] est une vue en perspective arrière du dispositif après repli de la potence et fixation de l'interface de levage au berceau ;
[Fig. 20] montre de façon schématique un dispositif selon un second mode de réalisation de l'invention.

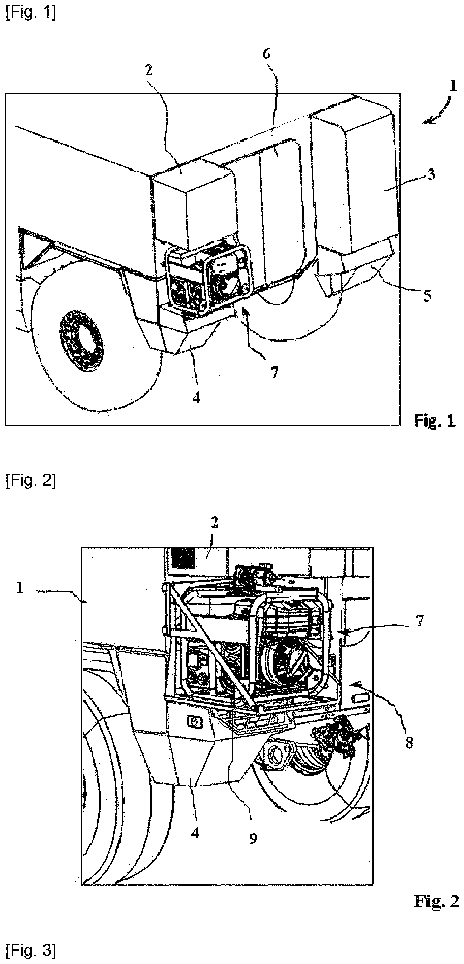

En se reportant à la figure 1, un véhicule blindé 1 comporte à sa partie arrière des caissons 2 et 3 et des coffres 4 et 5 disposés de part et d'autre d'une porte 6.

Comme on le voit sur la figure on cherche à positionner un équipement 7 (ici un petit groupe auxiliaire de puissance, ou groupe électrogène) entre le caisson 2 et le coffre 4.

L'espace disponible est assez limité alors que l'équipement 7 est relativement lourd (près de quatre-vingt kilogrammes) et donc difficile à soulever et à positionner dans un espace qui se limite pratiquement aux dimensions de l'équipement.

La figure 2 montre de façon rapprochée l'équipement 7 fixé au véhicule 1 à l'aide du dispositif de maintien 8 selon un mode de réalisation de l'invention.

Le dispositif de maintien 8 comprend ici un berceau 9 qui est fixé à la paroi externe du véhicule.

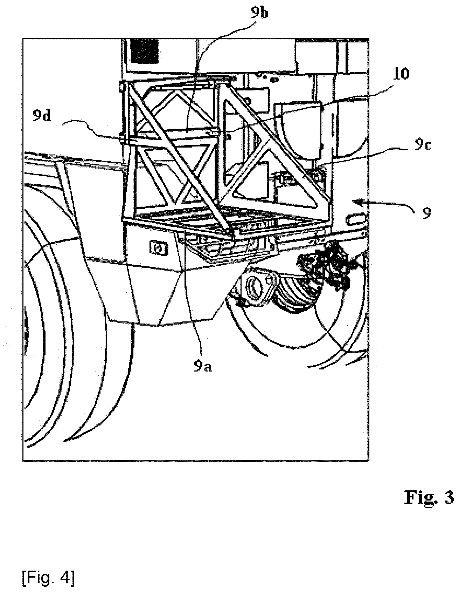

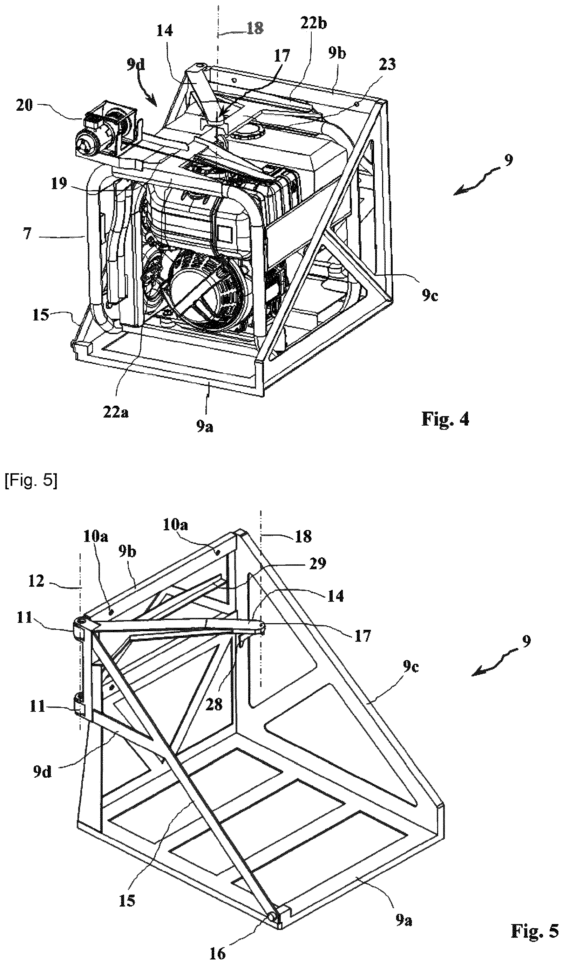

La figure 3 ainsi que les figures 5 à 7 permettent de mieux détailler la structure du berceau 9 qui comporte une face inférieure 9a horizontale, sur laquelle l'équipement 7 est destiné à être placé, et une face arrière 9b qui est fixée à une paroi externe du véhicule, par exemple par des vis 10 traversant des trous 10a de la face arrière 9b.

La face inférieure 9a et la face arrière 9b forment une équerre sur laquelle on pourra poser l'équipement 7. Ces faces sont réalisées en acier et forment une structure mécanosoudée robuste. La rigidité du berceau 9 est par ailleurs augmentée par la présence de deux faces latérales 9c et 9d qui ont une forme triangulaire et forment des jambes de force reliant les bords latéraux de la face inférieure 9a à la face arrière 9b.

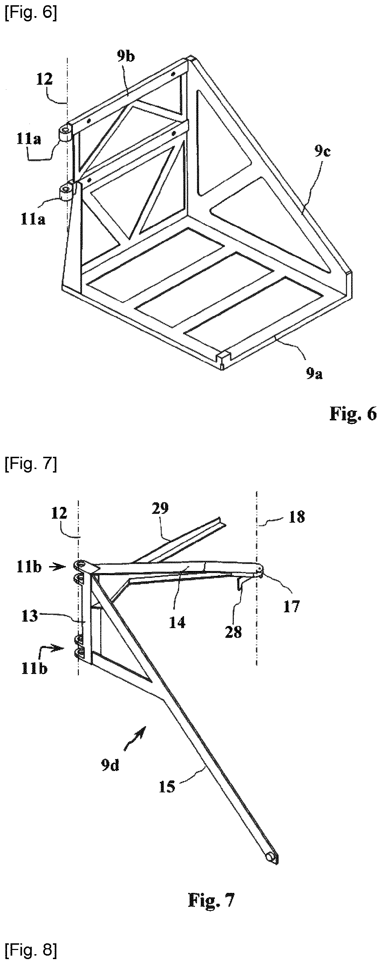

Comme on le voit sur les figures 5 et 6, si la face latérale droite 9c est fixe et soudée à la fois à la face inférieure 9a et à la face arrière 9b, la face latérale gauche 9d est mobile et montée sur la face arrière 9b par des articulations 11 qui permettent le pivotement de cette face latérale 9d autour d'un axe vertical 12. Chaque articulation 11 comprend une douille 11a solidaire de la face arrière 9b et deux languettes 11b solidaires de la face latérale gauche 9d, chaque douille 11a se positionnant entre deux languettes 11b. Des tiges pivots (non représentées) complètent les deux articulations 11.

Comme on le voit plus particulièrement à la figure 7, la face latérale gauche 9d forme une potence comportant un bras 14 solidaire d'un fût matérialisé par la barre 13 portant les languettes 11b des articulations 11.

La face latérale gauche 9d ou potence 9d comporte également une jambe 15 qui s'étend de la barre 13 jusqu'à la face inférieure 9a. Cette jambe 15 peut être rendue solidaire de la face inférieure 9a (donc du berceau 9) par un moyen de solidarisation 16 (tel une vis) lorsqu'elle est en position repliée, c'est-à-dire parallèle à la face latérale droite 9c.

Ainsi, lorsque la jambe 15 est fixée à la face inférieure 9a du berceau, la rigidité du berceau 9 est maximale et la sécurité de l'emport de l'équipement est assurée.

Bien entendu l'équipement 7 est lié au berceau 9 par des moyens de fixation démontables. Ces moyens ne sont pas représentés sur les figures mais sont des moyens classiques, par exemple des sangles souples munies d'attaches rapides et liant l'équipement 7 à la face inférieure 9a du berceau 9.

Ainsi lorsque l'équipement 7 est fixé au berceau 9 et que la face latérale gauche 9d est liée à la face inférieure 9a, les deux faces latérales 9c et 9d sont positionnées de part et d'autre de l'équipement 7 et assurent dans une certaine mesure sa protection contre les chocs externes.

Comme on le voit à la figure 5, lorsque la potence 9d est en position repliée, le bras 14 s'étend au-dessus de la face inférieure 9a du berceau 9. Le bras 14 comporte à son extrémité un trou 17 dont l'axe 18 est vertical et coupe la face inférieure 9a sensiblement au milieu de celle-ci.

Comme on le voit à la figure 4, lorsque l'équipement 7 est positionné sur le berceau 9, le bras 14 s'étend au-dessus de l'équipement 7. Le trou 17 est destiné à porter l'extrémité d'un câble 19 ayant un brin vertical 19a reliant la potence 9d à l'équipement 7. La direction verticale du brin 19a est de préférence positionnée à la verticale du centre de gravité de l'équipement 7.

Le câble 19 s'enroule à son autre extrémité sur un treuil 20 motorisé, par exemple un treuil électrique qui pourra être raccordé à une source d'alimentation du véhicule par un câble électrique non représenté. Ce treuil 20 permet d'assurer l'enroulement ou le déroulement du câble 19 pour permettre la dépose de l'équipement, par exemple au sol, après pivotement de la potence 9d comme nous allons le voir par la suite.

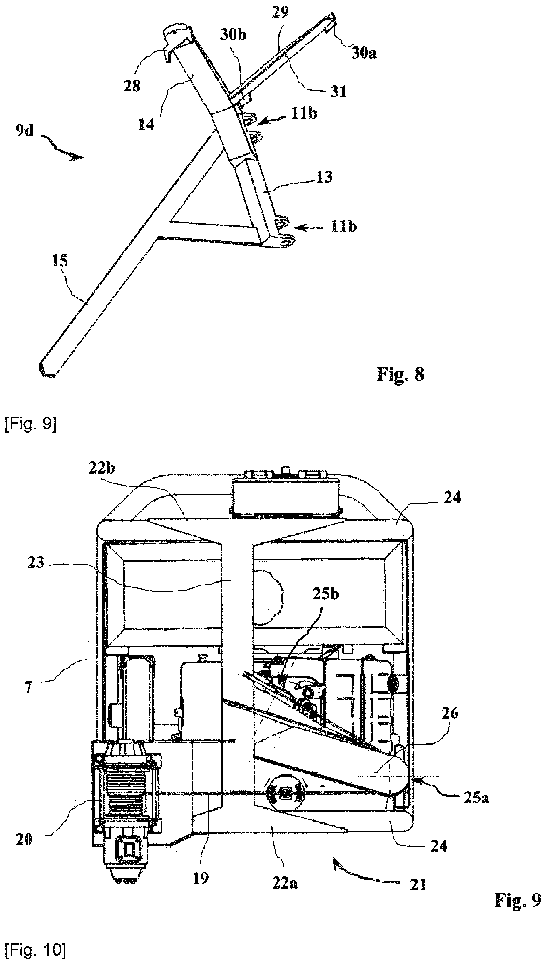

Suivant le mode de réalisation décrit, et comme on le voit en particulier à la figure 9, le treuil 20 motorisé est solidaire d'une interface de levage 21 qui est elle-même destinée à être fixée de façon démontable à l'équipement 7.

L'interface de levage 21 comporte deux mâchoires 22a et 22b reliées par une poutre transversale 23. Les mâchoires sont conformées de façon à pouvoir pincer les poignées latérales 24 de l'équipement 7 en les entourant partiellement. Ainsi le retrait de l'interface suivant une direction verticale est impossible sans démonter une des mâchoires.

On pourra lier au moins une des deux mâchoires 22a ou 22b à la poutre transversale 23 par un moyen de liaison démontable (tel une vis non représentée). Alors le démontage de la mâchoire considérée permettra d'écarter les mâchoires des poignées suivant une direction horizontale et donc de désolidariser l'interface de levage 21 de l'équipement 7.

Il est clair que la géométrie de l'interface de levage 21 sera adaptée à celle de l'équipement 7 qu'il doit soulever.

L'interface de levage 21 comporte au moins une poulie de renvoi 25a ou 25b qui permet de positionner le brin d'extrémité 19a du câble 19 à la verticale du bras 14 de la potence 9d. Le câble 19 est fixé au niveau du trou 17 du bras 14 de la potence par un moyen d'attache non représenté (par exemple par une manille).

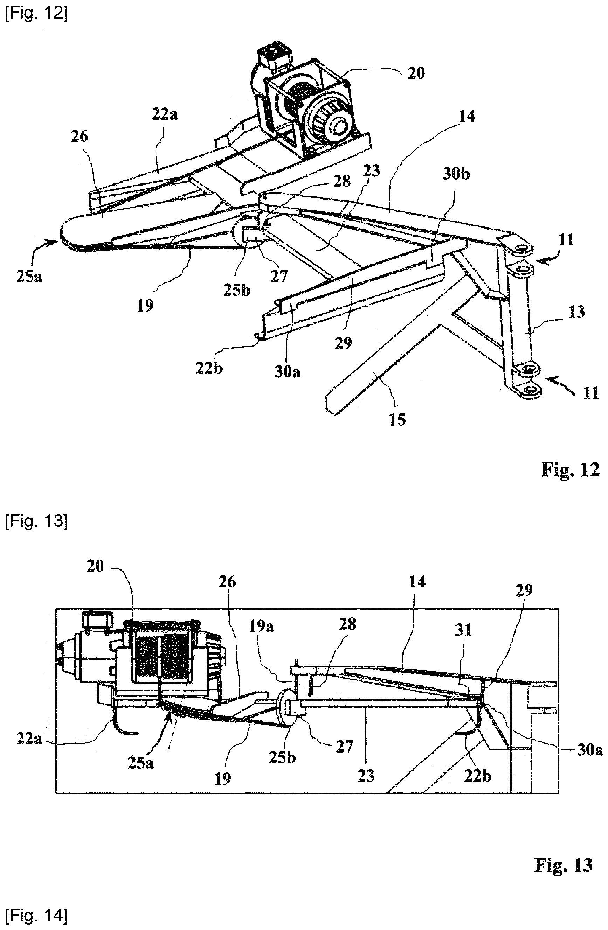

Comme on le voit à la figure 9 et également aux figures 12 à 15, l'interface de levage 21 comporte une première poulie de renvoi 25a et une seconde poulie de renvoi 25b.

La première poulie de renvoi 25a est portée par un support 26 qui est solidaire de la poutre transversale 23. Le support 26 permet d'orienter l'axe de la première poulie d'une façon adaptée permettant d'assurer un enroulement ou déroulement correct du câble 19 sur le treuil 20 tout en orientant le câble 19 vers la deuxième poulie de renvoi 25b.

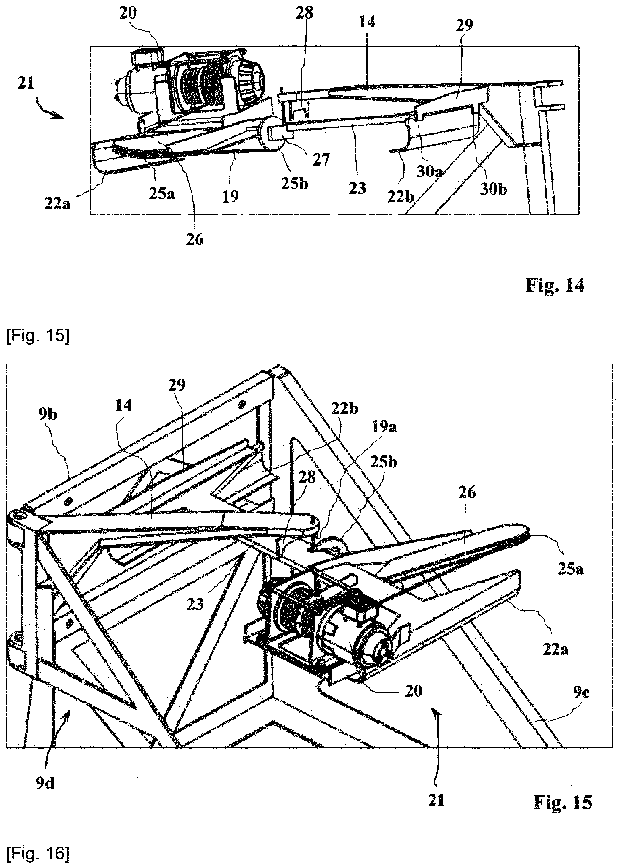

La seconde poulie 25b est portée par une fourche 27 solidaire de la poutre transversale 23. L'axe de la seconde poulie est horizontal et le brin de sortie 19a du câble 19 est orienté ainsi suivant une direction verticale vers le bras 14 de la potence 9d (voir la figure 15).

Afin de permettre la dépose de l'équipement 7, il est clair qu'il est nécessaire, d'une part de faire pivoter la potence 9d pour emmener l'équipement à distance de la face inférieure 9a du berceau 9, et d'autre part de commander le treuil 20 pour déposer l'équipement 7, par exemple sur le sol.

Afin d'éviter les frottements de l'équipement 7 sur la face inférieure 9a et pour éviter les balancements de l'équipement 7 qui nuisent à la sécurité de la manoeuvre, le procédé de dépose selon l'invention va comporter les étapes suivantes :
- on détache tout d'abord l'équipement 7 du berceau 9 en retirant les moyens de fixation démontables (par exemple en retirant les sangles).
- on retire ensuite le moyen de solidarisation 16 entre la jambe 15 et le berceau 9, ce qui va autoriser le pivotement de la potence 9d.
- on commande ensuite le treuil 20 pour soulever l'équipement 7 jusqu'à son contact contre des zones d'appui.

En effet, pour pouvoir faire pivoter facilement la potence, il est préférable que l'équipement 7 ne soit plus en contact avec la face inférieure 9a du berceau 9.

Pour sécuriser et fiabiliser la manoeuvre, des zones d'appui sont donc prévues sur la potence 9d.

Comme on le voit à la figure 8, le bras 14 de la potence 9d comporte une fourche 28 qui est destinée à constituer une zone d'appui et de positionnement pour la poutre transversale 23. On voit cet appui de la poutre 23 sur la fourche 28 sur la figure 12 qui montre la position soulevée de l'équipement 7.

Parallèlement la potence 9d comporte une aile 29 qui forme un angle avec le bras 14 (figure 8), aile qui porte deux zones d'appui 30a et 30b qui ont la forme de languettes solidaires d'une cornière 31. L'angle entre l'aile 29 et le bras 14 est choisi de façon à assurer un écartement suffisant des zones d'appui 28 et 30a,30b. Concrètement comme on le voit à la figure 5, le bras 14 est orienté sensiblement à 45° par rapport à la jambe 15 de la potence (c'est-à-dire au plan de la face latérale gauche 9d) et l'aile 29 est sensiblement parallèle à la face arrière 9b.

Les figures 14 et 15 permettent de mieux visualiser la forme de l'aile 29 et sa coopération avec l'interface de levage 21. On voit en particulier figure 14 que la mâchoire 22b de l'interface de levage 21 vient en appui contre la cornière 31 et qu'elle est également en butée latéralement contre les zones d'appui 30a et 30b.

Ainsi, comme visible à la figure 15, lorsque le treuil 20 a rapproché l'interface de levage 21 (portant l'équipement 7) du bras 14 de la potence 9d, il y a un contact de l'interface 21 avec la potence 9d sur au moins trois zones d'appui 28, 30a et 30b (et également contre la cornière 31). La forme de la fourche 28 qui coiffe la poutre 23 interdit par ailleurs tout pivotement de l'équipement 7 autour d'un axe vertical.

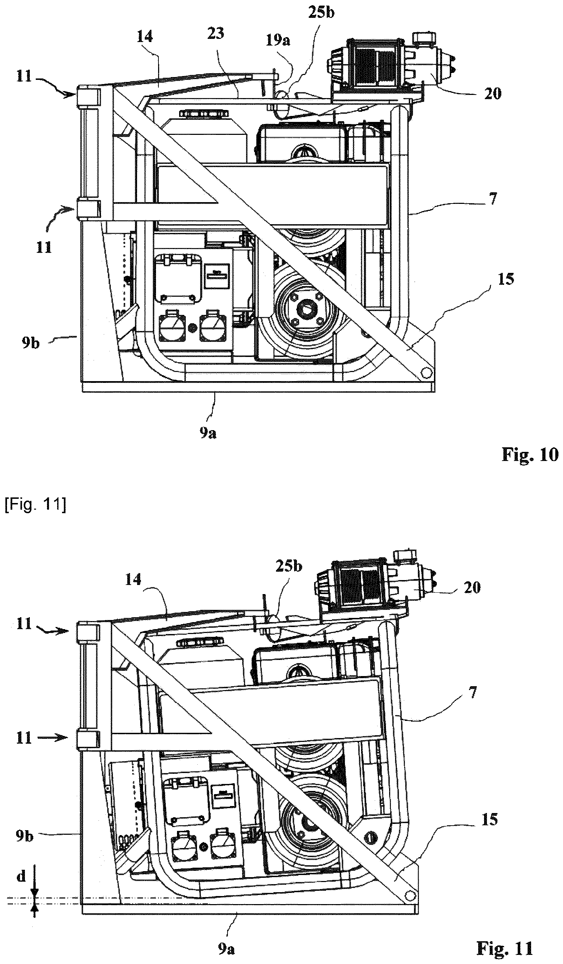

Il en résulte une stabilisation de l'équipement 7 par rapport à la potence 9d. Ainsi lorsque l'équipement 7 est soulevé et mis en butée (comme visible à la figure 11), il ne peut plus se balancer ou osciller par rapport à la potence 9d. L'équipement 7 se trouve à une distance d de la face inférieure 9a du berceau. Il est alors possible de faire pivoter la potence 9d pour écarter l'équipement 7 du berceau 9 sans frottements de l'équipement 7 sur la face inférieure 9a.

Les figures 2 et 16 à 19 montrent les différentes étapes du procédé de dépose selon l'invention.

Avant le début de la manoeuvre le dispositif est dans la position représentée à la figure 2.

Comme précisé plus haut, on détache tout d'abord l'équipement 7 du berceau 9 en retirant les moyens de fixation démontables, des sangles par exemple (non représentées). Ensuite on retire le moyen de solidarisation 16 de la jambe 15 et du berceau 9 ce qui autorisera le pivotement ultérieur de la potence 9d.

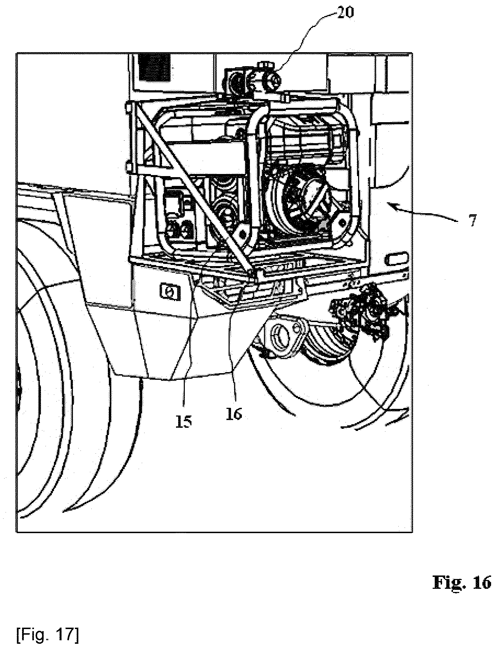

On commande ensuite le treuil 20 (figure 16) pour soulever l'équipement 7 jusqu'à contact de l'interface de levage 21 contre les zones d'appui 28,30a,30b,31 sur l'aile 29 et le bras 14.

Cette dernière position est celle représentée à la figure 16.

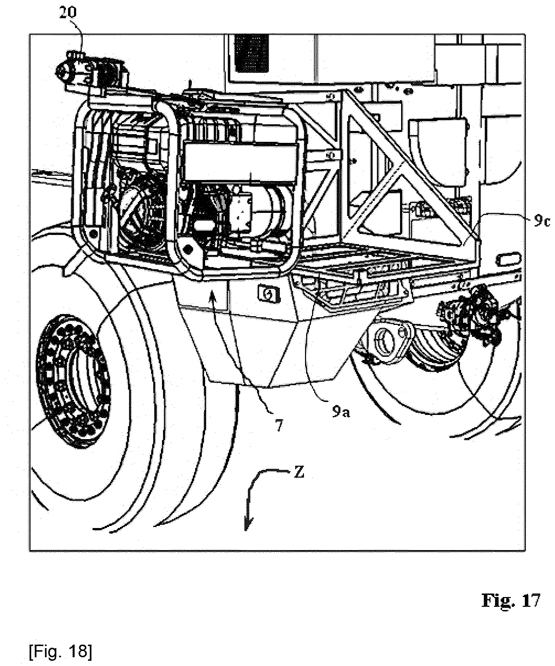

On fait ensuite pivoter manuellement la potence 9d sur ses articulations 11 pour écarter l'équipement 7 de la face inférieure 9a du berceau 9 et le positionner au-dessus d'une zone Z dégagée (figure 17).

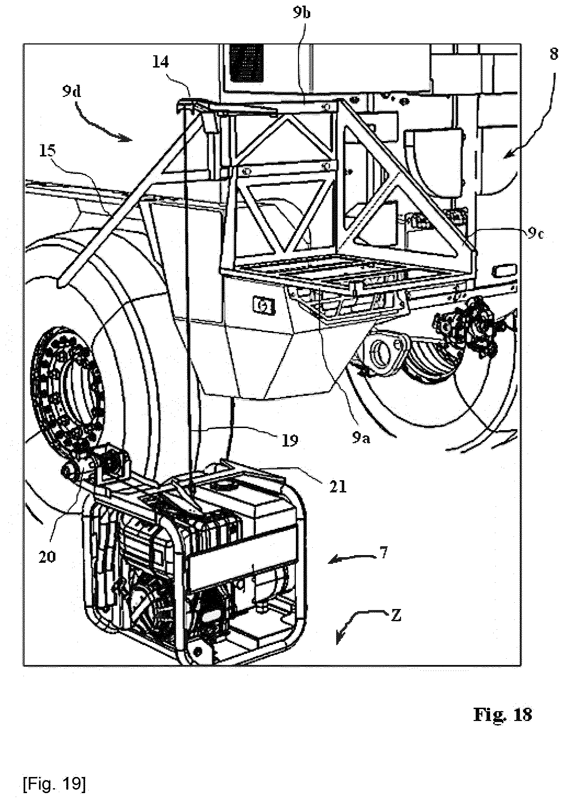

On commande enfin le treuil 20 pour faire descendre l'équipement 7 sur la zone dégagée Z, par exemple sur le sol (figure 18).

Après avoir détaché l'équipement 7 de son interface de levage 21, on commande le treuil 20 pour faire remonter l'interface de levage 21 jusqu'à sa mise en butée contre les zones d'appui 28, 30a et 30b (et également contre la cornière 31). L'interface de levage 21 est alors complètement solidaire de la potence 9d.

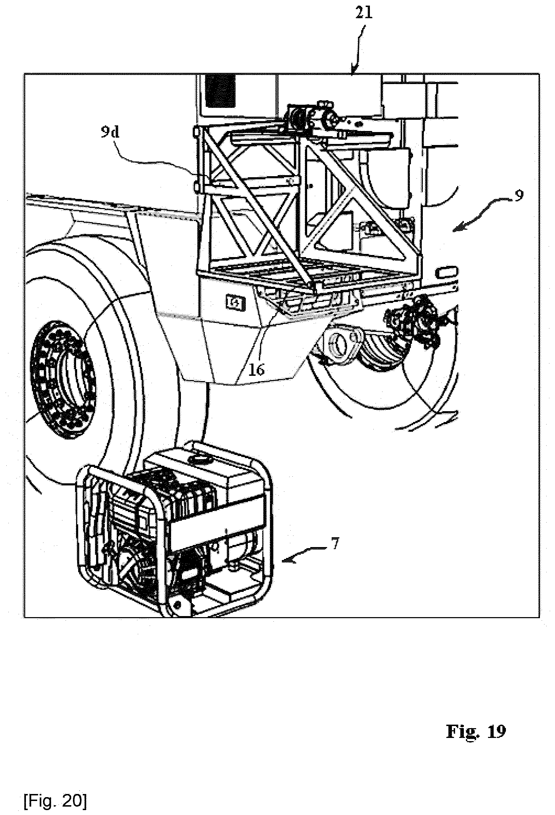

On replie la potence 9d est on la fixe au berceau 9 par le moyen de solidarisation 16 (figure 19).

Bien entendu pour repositionner l'équipement 7 sur son berceau 9 on opérera en sens inverse :
- Retrait du moyen de solidarisation 16 de la potence 9d ;
- Pivotement de la potence 9d jusqu'à positionnement du bras au-dessus de l'équipement 7 à emporter ;
- Descente de l'interface de levage 21 par commande du treuil 20 ;
- Fixation de l'interface de levage 21 à l'équipement 7 ;
- Remontée de l'équipement 7 par commande du treuil 20 jusqu'à mise en butée de l'interface de levage 21 contre les zones d'appui 28,30a,30b,31 ;
- Pivotement de la potence 9d pour ramener l'équipement 7 au-dessus de la face inférieure 9a du berceau 9 ;
- Commande du treuil 20 pour faire descendre l'équipement en appui sur la face inférieure 9a du berceau 9 ;
- Mise en place des moyens de fixation de l'équipement 7 sur son berceau 9 et mise en place du moyen de solidarisation 16 de la potence 9d par rapport au berceau 9.

L'équipement 7 est alors solidaire du véhicule 1, fixé de façon sûre à son berceau 9.

Différentes variantes sont possibles sans sortir du cadre de l'invention.

Bien entendu l'interface de levage aura sa forme adaptée à celle de l'équipement qu'elle doit emporter. Elle devra cependant toujours comporter des zones pouvant venir en contact avec des zones d'appui de la potence.

La description montre un berceau 9 dont la potence est disposée au niveau de la face latérale gauche. Il est bien entendu possible de définir un berceau dont la potence est disposée au niveau de la face latérale droite.

Le mode de réalisation préféré qui a été décrit comporte une interface de levage qui incorpore le treuil.

Il est également possible de définir un dispositif de maintien et dépose dans lequel le treuil n'est pas solidaire de l'interface de levage fixée à l'équipement.

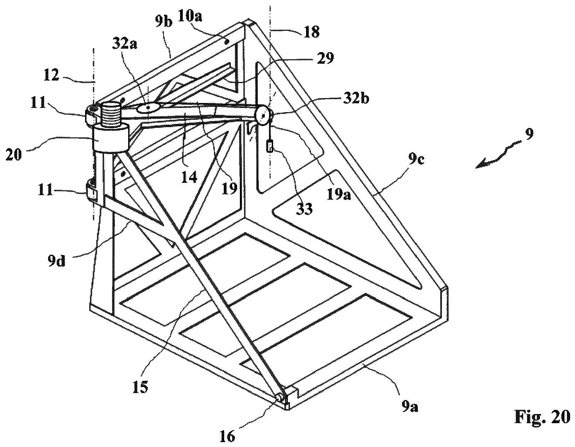

La figure 20 schématise un tel mode de réalisation dans lequel le treuil 20 est solidaire de la potence 9d.

Dans le cas du mode représenté, le bras 14 porte deux poulies de renvoi 32a et 32b qui permettent de diriger le câble 19 du treuil 20 vers la poulie d'extrémité 32b qui oriente l'extrémité libre 19a du câble 19 suivant une direction verticale. Le câble porte alors à son extrémité libre 19a un moyen d'attache 33 qui est destiné à être fixé à l'équipement (non représenté).

Le nombre et la localisation des poulies de renvoi sera choisi en fonction de la localisation du treuil 20 par rapport au bras 14 de la potence 9d.

Ce mode de réalisation pourra être envisagé lorsque l'espace libre à proximité de la potence autorise son déploiement malgré la présence du treuil.

## Revendications

1. Dispositif (8) de maintien et dépose d'un équipement (7) par rapport à une paroi externe d'un véhicule (1), dispositif comprenant un berceau (9) destiné à être fixé à la paroi externe du véhicule et destiné à recevoir l'équipement (7) qui est rendu solidaire du berceau (9) par des moyens de fixation démontables, le berceau (9) portant une potence (9d) pivotante articulée par rapport au berceau (9), où la potence (9d) est montée pivotante par rapport à un axe (12) vertical, potence comportant un bras (14) qui s'étend, lorsque la potence (9d) est repliée, au-dessus de l'équipement (7) lorsque celui-ci est lui-même en position solidaire du berceau (9), potence qui porte à son extrémité un câble (19) ayant un brin vertical (19a) reliant la potence (9d) à l'équipement (7), un treuil (20) assurant l'enroulement ou le déroulement du câble (19) pour permettre la dépose de l'équipement (7), par exemple au sol, après pivotement de la potence (9d).

2. Dispositif de maintien et dépose d'un équipement selon la revendication 1, où le berceau (9) comporte une face inférieure (9a) sur laquelle l'équipement (7) est destiné à être placé et deux faces latérales (9c,9d) destinées à être positionnées de part et d'autre de l'équipement (7), la potence (9d) constituant une des faces latérales du berceau (9) et étant articulée au niveau d'un côté du berceau, le pivotement de la potence (9d) écartant son bras (14) de la face inférieure (9a), la potence comportant une jambe (15) pouvant par ailleurs être rendue solidaire du berceau (9) par un moyen de solidarisation (16) lorsqu'elle est en position repliée.

3. Dispositif de maintien et dépose d'un équipement selon une des revendications 1 ou 2, où la potence (9d) porte le treuil (20) motorisé, le bras (14) portant au moins une poulie (32a,32b) permettant d'orienter le câble (19) vers le treuil (20), le câble (19) portant à son extrémité libre un moyen d'attache (33) destiné à être fixé à l'équipement.

4. Dispositif de maintien et dépose d'un équipement selon une des revendications 1 ou 2, où le treuil motorisé (20) est solidaire d'une interface de levage (21) destinée à être fixé à l'équipement (7), l'interface de levage comportant au moins une poulie de renvoi (25a,25b) permettant de positionner le brin d'extrémité (19a) du câble (19) à la verticale du bras (14) de la potence (9d), le câble (19) étant fixé au bras (14) de la potence par un moyen d'attache.

5. Dispositif de maintien et dépose d'un équipement selon la revendication 4, où la potence (9d) porte une aile (29) formant un angle avec le bras (14), aile portant au moins deux zones d'appui (30a,30b,31) et le bras (14) comportant par ailleurs au moins une troisième zone d'appui (28), les au moins trois zones d'appui étant destinées à assurer un contact avec l'équipement et/ou l'interface de levage (21) avant le pivotement de la potence.

6. Procédé de dépose d'un équipement mettant en oeuvre le dispositif selon la revendication 5, procédé **caractérisé par** les étapes suivantes :
- on détache l'équipement (7) du berceau (9) en retirant les moyens de fixation démontables ;
- on retire le moyen de solidarisation (16) de la jambe (15) et du berceau (9) ce qui autorise le pivotement de la potence (9d) ;
- on commande le treuil (20) pour soulever l'équipement (7) jusqu'à contact de l'équipement (7) et/ou de l'interface de levage (21) contre les zones d'appui (30a,30b,31,28) sur l'aile (29) et le bras (14) ;
- on fait pivoter la potence (9d) sur ses articulations (11) pour écarter l'équipement (7) de la face inférieure (9a) du berceau (9) et le positionner au-dessus d'une zone dégagée (Z) ;
- on commande le treuil (20) pour faire descendre l'équipement (7) jusqu'à la zone dégagée (Z).

7. Procédé de dépose d'un équipement selon la revendication 6, où, après dépose de l'équipement (7), on désolidarise l'interface de levage (21) de l'équipement (7).

8. Procédé de dépose d'un équipement selon une des revendications 6 ou 7, où, après dépose de l'équipement (7), on commande le treuil (20) pour faire remonter l'interface de levage (21) et l'amener en contact contre les zones d'appui sur l'aile (29) et le bras (14) .

9. Procédé de dépose d'un équipement selon la revendication 8, où, après remontée de l'interface de levage (21), on replie la potence (9d) et on solidarise la jambe (15) et le berceau (9).

## Patentansprüche

1. - Vorrichtung (8) zum Halten und Absetzen einer Ausrüstung (7) im Verhältnis zu einer Außenwand eines Fahrzeugs (1), wobei die Vorrichtung eine Halterung (9) umfasst, die zur Befestigung an der Außenwand des Fahrzeugs bestimmt ist und zur Aufnahme der Ausrüstung (7) bestimmt ist, die mit der Halterung (9) durch demontierbare Befestigungsmittel fest verbunden ist, wobei die Halterung (9) einen schwenkbaren Vorbau (9d) trägt, der im Verhältnis zu der Halterung (9) angelenkt ist, wobei der Vorbau (9d) im Verhältnis zu einer vertikalen Achse (12) schwenkbar angebracht ist, wobei der Vorbau einen Arm (14) aufweist, der sich, wenn der Vorbau (9d) zusammengefaltet ist, oberhalb der Ausrüstung (7) erstreckt, wenn diese selbst in einer mit der Halterung (9) fest verbundenen Position ist, wobei der Vorbau, der an seinem Ende ein Kabel (19) mit einem vertikalen Strang (19a) trägt, der den Vorbau (9d) mit der Ausrüstung (7) verbindet, wobei eine Winde (20) das Aufwickeln oder das Abwickeln des Kabels (19) gewährleistet, um das Absetzen der Ausrüstung (7), beispielsweise auf dem Boden, nach dem Schwenken des Vorbaus (9d) zu gestatten.

2. - Vorrichtung zum Halten und Absetzen einer Ausrüstung nach Anspruch 1, wobei die Halterung (9) eine untere Fläche (9a) aufweist, auf der die Ausrüstung (7) bestimmt ist, platziert zu sein, und zwei seitliche Flächen (9c, 9d), die bestimmt sind, beiderseits der Ausrüstung (7) platziert zu sein, wobei der Vorbau (9d) eine der seitlichen Flächen der Halterung (9) bildet und im Bereich einer Seite der Halterung angelenkt ist, wobei beim Schwenken des Vorbaus (9d) sein Arm (14) von der unteren Fläche (9a) beabstandet wird, wobei der Vorbau ein Bein (15) aufweist, das im Übrigen mit der Halterung (9) durch ein Mittel zur festen Verbindung (16) verbindbar ist, wenn er in zusammengefalteter Position ist.

3. - Vorrichtung zum Halten und Absetzen einer Ausrüstung nach einem der Ansprüche 1 oder 2, wobei der Vorbau (9d) die motorisierte Winde (20) trägt, wobei der Arm (14) mindestens eine Rolle (32a, 32b) trägt, die erlaubt, das Kabel (19) zur Winde (20) auszurichten, wobei das Kabel (19) an seinem freien Ende eine Anbringungseinrichtung (33) trägt, die zur Befestigung an der Ausrüstung bestimmt ist.

4. - Vorrichtung zum Halten und Absetzen einer Ausrüstung nach einem der Ansprüche 1 oder 2, wobei die motorisierte Winde (20) mit einer Hebeschnittstelle (21) fest verbunden ist, die zur Befestigung an der Ausrüstung (7) bestimmt ist, wobei die Hebeschnittstelle mindestens eine Umlenkrolle (25a, 25b) aufweist, die erlaubt, den Endstrang (19a) des Kabels (19) in der Vertikalen zum Arm (14) des Vorbaus (9d) zu positionieren, wobei das Kabel (19) am Arm (14) des Vorbaus durch eine Anbringungseinrichtung befestigt ist.

5. - Vorrichtung zum Halten und Absetzen einer Ausrüstung nach Anspruch 4, wobei der Vorbau (9d) einen Flügel (29) trägt, der mit dem Arm (14) einen Winkel bildet, wobei der Flügel mindestens zwei Stützzonen (30a, 30b, 31) trägt und der Arm (14) im Übrigen mindestens eine dritte Stützzone (28) aufweist, wobei die mindestens drei Stützzonen zur Sicherung eines Kontakts mit der Ausrüstung und/oder der Hebeschnittstelle (21) vor dem Schwenken des Vorbaus bestimmt sind.

6. - Verfahren zum Absetzen einer Ausrüstung, das die Vorrichtung nach Anspruch 5 verwendet, wobei das Verfahren durch die folgenden Schritte gekennzeichnet ist:
- Lösen der Ausrüstung (7) von der Halterung (9) durch Entfernen der demontierbaren Befestigungsmittel;
- Entfernen des Mittels zur festen Verbindung (16) des Beins (15) und der Halterung (9), wodurch das Schwenken des Vorbaus (9d) erlaubt wird;
- Bedienen der Winde (20), um die Ausrüstung (7) bis zum Kontakt der Ausrüstung (7) und/oder der Hebeschnittstelle (21) mit den Stützzonen (30a, 30b, 31, 28) auf dem Flügel (29) und dem Arm (14) anzuheben;
- Schwenken des Vorbaus (9d) auf seinen Gelenken (11), um die Ausrüstung (7) von der unteren Fläche (9a) der Halterung (9) zu beabstanden und sie oberhalb einer freien Zone (Z) zu positionieren;
- Bedienen der Winde (20), um die Ausrüstung (7) bis zu der freien Zone (Z) abzusenken.

7. - Verfahren zum Absetzen einer Ausrüstung nach Anspruch 6, wobei nach dem Absetzen der Ausrüstung (7) die Hebeschnittstelle (21) von der Ausrüstung (7) getrennt wird.

8. - Verfahren zum Absetzen einer Ausrüstung nach einem der Ansprüche 6 oder 7, wobei nach dem Absetzen der Ausrüstung (7) die Winde (20) bedient wird, um die Hebeschnittstelle (21) erneut anzuheben und sie in Kontakt mit den Stützzonen auf dem Flügel (29) und dem Arm (14) zu führen.

9. - Verfahren zum Absetzen einer Ausrüstung nach Anspruch 8, wobei nach dem erneuten Anheben der Hebeschnittstelle (21), der Vorbau (9d) zusammengefaltet wird und das Bein (15) und die Halterung (9) fest verbunden werden.

## Claims

1. - A device (8) for holding and depositing an equipment item (7) relative to an outer wall of a vehicle (1), the device comprising a cradle (9) intended to be attached to the outer wall of the vehicle and intended to receive the equipment item (7) that is secured to the cradle (9) by removable attachment means, the cradle (9) bearing a pivoting bracket (9d) articulated relative to the cradle (9), the bracket (9d) being mounted pivoting relative to a vertical axis (12), the bracket comprising an arm (14) that extends, when the bracket (9d) is folded away, above the equipment item (7) when the latter is in turn in position secured to the cradle (9), the bracket bearing, at its end, a cable (19) having a vertical strand (19a) connecting the bracket (9d) to the equipment item (7), a winch (20) ensuring the winding or unwinding of the cable (19) to allow the depositing of the equipment item (7), for example on the ground, after pivoting of the bracket (9d).

2. - The device for holding and depositing an equipment item according to claim 1, wherein the cradle (9) includes a lower face (9a) on which the equipment item (7) is intended to be placed and two side faces (9c, 9d) intended to be positioned on either side of the equipment item (7), the bracket (9d) constituting one of the side faces of the cradle (9) and being articulated at one side of the cradle, the pivoting of the bracket (9d) separating its arm (14) from the lower face (9a), the bracket including a leg (15) also able to be secured to the cradle (9) by a securing means (16) when it is in the folded away position.

3. - The device for holding and depositing an equipment item according to one of claims 1 or 2, wherein the bracket (9d) bears the motorized winch (20), the arm (14) bearing at least one pulley (32a, 32b) allowing the cable (19) to be oriented toward the winch (20), the cable (19) bearing, at its free end, a fastening means (33) intended to be attached to the equipment item.

4. - The device for holding and depositing an equipment item according to one of claims 1 or 2, wherein the motorized winch (20) is secured to a lifting interface (21) intended to be attached to the equipment item (7), the lifting interface including at least one guide pulley (25a, 25b) allowing the end strand (19a) of the cable (19) to be positioned at the vertical of the arm (14) of the bracket (9d), the cable (19) being attached to the arm (14) of the bracket by a fastening means.

5. - The device for holding and depositing an equipment item according to claim 4, wherein the bracket (9d) bears a wing (29) forming an angle with the arm (14), the wing bearing at least two bearing zones (30a, 30b, 31) and the arm (14) moreover including at least one third bearing zone (28), the at least three bearing zones being intended to ensure contact with the equipment item and/or the lifting interface (21) before the pivoting of the bracket.

6. - A method for depositing an equipment item implementing the device according to claim 5, wherein the method is **characterising by** the following steps:
- detaching the equipment item (7) from the cradle (9) by removing the removable attachment means;
- removing the securing means (16) for securing the leg (15) and the cradle (9), which allows the pivoting of the bracket (9d);
- controlling the winch (20) to lift the equipment item (7) until the equipment item (7) and/or the lifting interface (21) comes into contact against the bearing zones (30a, 30b, 31, 28) on the wing (29) and the arm (14) ;
- pivoting the bracket (9d) on its articulations (11) to distance the equipment item (7) from the lower face (9a) of the cradle (9) and to position it above a clear zone (Z) ;
- controlling the winch (20) to lower the equipment item (7) to the clear zone (Z).

7. - The method for depositing an equipment item according to claim 6, wherein, after depositing the equipment item (7), the lifting interface (21) is separated from the equipment item (7).

8. - The method for depositing an equipment item according to one of claims 6 or 7, wherein, after depositing the equipment item (7), the winch (20) is controlled to raise the lifting interface (21) and to bring it into contact against the bearing zones on the wing (29) and the arm (14).

9. - The method for depositing an equipment item according to claim 8, wherein, after raising the lifting interface (21), the bracket (9d) is folded away and the leg (15) and the cradle (9) are secured.
